# EUROPEAN PATENT APPLICATION

(11) **EP 4 852 338 A2**
(43) Date of publication of application: **09.12.2026**
(21) Application number: 26213317.6
(22) Date of filing: 15.08.2019
(51) Int. Cl.: H04B 7/06

(54) **TERMINAL AND COMMUNICATION METHOD**

(62) Document number(s) of the earlier application(s) in accordance with Art. 76 EPC: 19940974.9 / 4 016 870
(71) Applicant: NTT DOCOMO, INC., Tokyo 100-6150 (JP)
(72) Inventor: KAKISHIMA, Yuichi, Chiyoda-ku, Tokyo, 100-6150 (JP); MATSUMURA, Yuki, Chiyoda-ku, Tokyo, 100-6150 (JP)
(74) Representative: Hoffmann Eitle

(57) **Abstract**

A terminal includes a control unit that uses, in a case where a reference signal associated with a channel satisfies a condition, the reference signal to perform synchronization without referring to a QCL (Quasi-Co-Location) source for the reference signal, and a reception unit that receives the channel after the synchronization is performed by the control unit by using the reference signal.

## Description

### TECHNICAL FIELD

The present invention relates to a terminal and a communication method in a radio communication system.

### BACKGROUND ART

In NR (New Radio) (also referred to as "5G") as a successor system of LTE (Long Term Evolution), techniques for satisfying a high capacity system, a fast data transmission speed, a low latency, simultaneous connection of a large number of terminals, a low cost, power saving or the like as requirements are being discussed (for example, non-patent document 1).

In the NR, a higher frequency band than the LTE is used. Since propagation loss increases in the high frequency band, it is considered that beam forming of a narrow beam width is applied to radio signals for improved reception power so as to compensate for the propagation loss (for example, non-patent document 2).

### [Prior Art Document]

### [Non-Patent Document]

[Non-Patent Document 1] 3GPP TS 38.300 V15.6.0 (2019-06)
[Non-Patent Document 2] 3GPP TS 38.211 V15.6.0 (2019-06)

### SUMMARY OF INVENTION

### [PROBLEM TO BE SOLVED BY THE INVENTION]

In the NR radio communication system, if a base station switches a transmission beam, a terminal must switch QCL (Quasi-Co-Location) information associated with a synchronization signal or a reference signal. If the switching of the QCL information occurs, the terminal must perform a synchronization operation or perform transmission and reception beam pair learning, for example.

In light of the above aspect, the present invention aims to reduce the processing amount of synchronization associated with a QCL (Quasi-Co-Location) in a radio communication system.

### [MEANS FOR SOLVING THE PROBLEM]

According to a technique disclosed herein, there is provided a terminal, comprising: a control unit that uses, in a case where a reference signal associated with a channel satisfies a condition, the reference signal to perform synchronization without referring to a QCL (Quasi-Co-Location) source for the reference signal; and a reception unit that receives the channel after the synchronization is performed by the control unit by using the reference signal.

### [ADVANTAGE OF THE INVENTION]

According to the disclosed technique, the processing amount of synchronization associated with the QCL (Quasi-Co-Location) can be reduced in the radio communication system.

### BRIEF DESCRIPTION OF DRAWINGS

FIG. 1 is a diagram illustrating a radio communication system according to an embodiment of the present invention;
FIG. 2 is a sequence diagram illustrating an exemplary configuration for a TCI state;
FIG. 3 is a diagram illustrating an example of beam management;
FIG. 4 is a diagram illustrating an example of QCL;
FIG. 5 is a diagram illustrating an example of switching the QCL information (1) according to an embodiment of the present invention;
FIG. 6 is a diagram illustrating an example of switching the QCL information (2) according to an embodiment of the present invention;
FIG. 7 is a diagram illustrating an example of an indication by DCI (1) according to an embodiment of the present invention;
FIG. 8 is a diagram illustrating an example of an indication by DCI (2) according to an embodiment of the present invention;
FIG. 9 is a diagram illustrating an example of configuration of a PDCCH (1) according to an embodiment of the present invention;
FIG. 10 is a diagram illustrating an example of configuration of a PDCCH (2) according to an embodiment of the present invention;
FIG. 11 is a diagram illustrating an example of functional arrangement of a base station 10 according to an embodiment of the present invention;
FIG. 12 is a diagram illustrating an example of functional arrangement of a terminal 20 according to an embodiment of the present invention; and
FIG. 13 is a diagram illustrating an example of hardware arrangement of the base station 10 or the terminal 20 according to an embodiment of the present invention.

### EMBODIMENTS OF THE INVENTION

Hereinafter, embodiments of the present invention will be described with reference to the drawings. The embodiments described below are merely examples, and embodiments to which the present invention is applied are not limited to the following embodiments.

In operations of a radio communication system of an embodiment of the present invention, conventional techniques are used as needed. Note that the conventional techniques are conventional LTE, for example, but are not limited to the conventional LTE. Also, unless specifically stated otherwise, it should be appreciated that the terminology "LTE" used herein has a broader meaning including LTE-Advanced and its subsequent schemes (e.g., NR).

Also, in embodiments of the present invention as described below, terminologies "SS (Synchronization Signal)", "PSS (Primary SS)", "SSS (Secondary SS)", "PBCH (Physical Broadcast Channel)", "PRACH (Physical Random Access Channel)", "PDCCH (Physical Downlink Control Channel)", "PDSCH (Physical Downlink Shared Channel)", "PUCCH (Physical Uplink Control Channel)", "PUSCH (Physical Uplink Shared Channel)" or the like used in the conventional LTE are used. This is due to convenience of recitations, and a signal, a function or the like similar to them may be referred to as other wordings. Also, the above terminologies correspond to "NR-SS", "NR-PSS", "NR-SSS", "NR-PBCH", "NR-PRACH", "NR-PDCCH", "NR-PDSCH", "NR-PUCCH", "NR-PUSCH" or the like, respectively, in the NR. Note that even if the signals are used in the NR, they may not be explicitly described as "NR-".

Also, in embodiments of the present invention, a duplex scheme may be TDD (Time Division Duplex) scheme, FDD (Frequency Division Duplex) scheme or other schemes (e.g., flexible duplex scheme or the like).

Also, in the following description, the scheme for transmitting signals by means of transmission beams may be digital beam forming for transmitting signals multiplied with precoding vectors (precoded with the precoding vectors) or analog beam forming for implementing beam forming by means of a variable phase shifter in an RF (Radio Frequency) circuit. Similarly, the scheme for receiving signals by means of reception beams may be digital beam forming where predetermined weight vectors are multiplied with received signals or analog beam forming for implementing beam forming by means of a variable phase shifter in an RF circuit. Hybrid beam forming composed of the digital beam forming and the analog beam forming may be applied. Also, transmission of signals with transmission beams may be to transmit signals with certain antenna ports. Similarly, reception of signals with reception beams may be to receive signals with certain antenna ports. The antenna port denotes a logical antenna port or a physical antenna port defined in 3GPP specification.

Note that the forming schemes of transmission beams and reception beams are not limited to the above schemes. For example, in the base station 10 or the terminal 20 having multiple antennas, a scheme for changing the angles of respective antennas, a scheme where the scheme using precoding vectors and the scheme for changing the angles of antennas are combined, a scheme where different antenna panels are switched for use, a scheme using a combination of multiple antenna panels, or other schemes may be used. Also, for example, multiple mutually different transmission beams may be used in a high frequency band, for example. Use of multiple transmission beams is referred to as multiple beams operation, and use of a single transmission beam is referred to as single beam operation.

Also, in embodiments of the present invention, "configuring" a radio parameter or the like may mean that a predetermined value is pre-configured or that a radio parameter indicated from the base station 10 or the terminal 20 is configured.

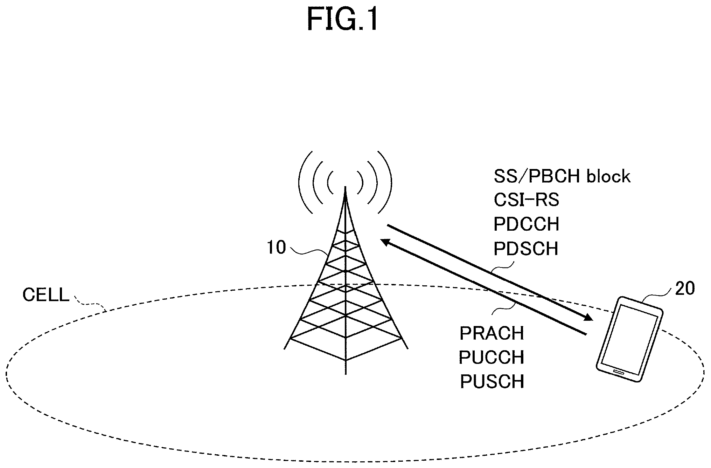

FIG. 1 is a diagram for illustrating a radio communication system according to an embodiment of the present invention. As illustrated in FIG. 1, the radio communication system according to the embodiment of the present invention includes the base station 10 and the terminal 20. In FIG. 1, the single base station 10 and the single terminal 20 are illustrated, but the illustrated embodiment is merely one example, and a plurality of the base stations 10 and a plurality of the terminals 20 may be provided.

The base station 10 is a communication device that serves one or more cells and wirelessly communicates to the terminal 20. A physical resource for a radio signal is defined with a time domain and a frequency domain. The time domain may be defined with the number of OFDM symbols, and the frequency domain may be defined with the number of subcarriers or the number of resource blocks. The base station 10 transmits a synchronization signal and system information to the terminal 20. The synchronization signal may be an NR-PSS and an NR-SSS, for example. A portion of the system information may be transmitted in an NR-PBCH, for example, and may be also referred to as broadcast information. The synchronization signal and the broadcast information may be periodically transmitted as an SSB (SS/PBCH block) composed of a predetermined number of OFDM symbols. For example, the base station 10 transmits a control signal or data to the terminal 20 in DL (Downlink) and receives a control signal or data from the terminal 20 in UL (Uplink). Any of the base station 10 and the terminal 20 can perform beam forming to transmit and receive signals. For example, as illustrated in FIG. 1, a reference signal transmitted from the base station 10 includes a CSI-RS (Channel State Information Reference Signal), and a channel transmitted from the base station 10 includes a PDCCH (Physical Downlink Control Channel) and a PDSCH (Physical Downlink Shared Channel).

The terminal 20 is a communication device having a radio communication function such as a smartphone, a portable telephone, a tablet, a wearable terminal, a M2M (Machine-to-Machine) communication module or the like. The terminal 20 receives a control signal or data from the base station 10 in DLs and transmits a control signal or data to the base station 10 in ULs to use various communication services provided by the radio communication system. For example, as illustrated in FIG. 1, channels transmitted from the terminal 20 include a PUCCH (Physical Uplink Control Channel) and a PUSCH (Physical Uplink Shared Channel).

In the NR, antenna port is defined by allowing a channel where a certain symbol is conveyed at the antenna port to be estimated from a channel where other symbols are conveyed at the antenna port. Two antenna ports being quasi co-located may mean that for channel properties including a delay spread, a Doppler spread, a Doppler shift, an average gain, an average delay or a spatial reception parameter and so on, the channel property for one antenna port can be estimated from the channel property for the other.

Multiple types of QCLs are defined. QCL type A relates to a Doppler shift, a Doppler spread, an average delay and a delay speed. QCL type B relates to a Doppler shift and a Doppler spread. QCL type C relates to a Doppler shift and an average delay. QCL type D relates to a spatial reception (Rx) parameter. Accordingly, QCL types A, B and C are QCL information related to time or frequency synchronization operations, and QCL type D is QCL information related to beam control.

Here, for example, if a certain SSB and a certain CSI-RS are QCL type D, the terminal 20 can apply the same reception beam forming for reception by assuming that the SSB and the CSI-RS are transmitted with the same DL beam from the base station 10. In the following description, "QCL type D is mainly described, but it may be replaced with QCL type A, B or C as needed.

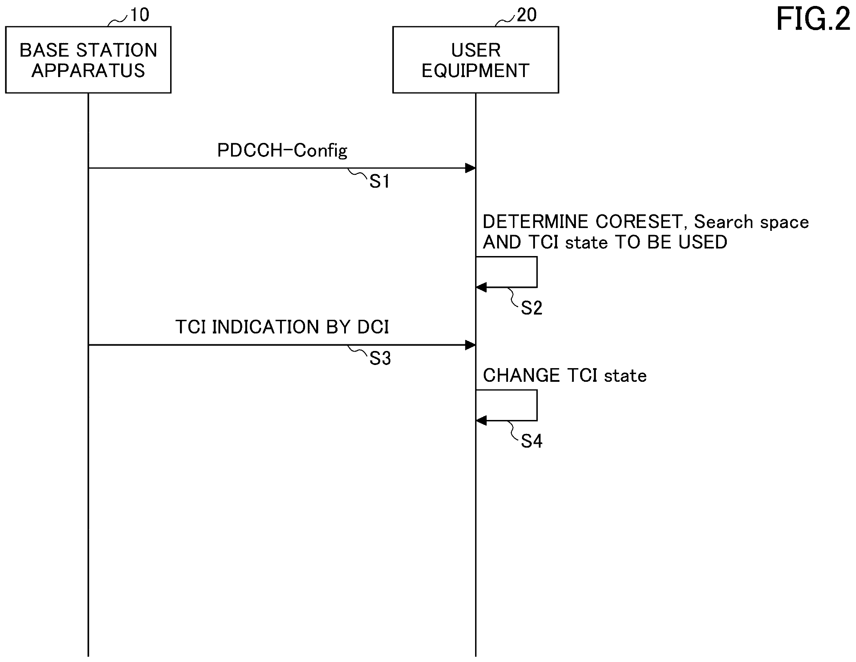

FIG. 2 is a sequence diagram for illustrating exemplary configuration a TCI state. In the NR, the TCI (Transmission Configuration Indicator) state is defined. The TCI state is to indicate a QCL relationship for a DL reference signal, and one or more TCI states are included in an RRC (Radio Resource Control) signaling for configuring a control resource set (CORESET). The DL reference signal is an SSB or a CSI-RS. In other words, it is determined based on a certain control resource set which TCI state is applied and which DL reference signal corresponds to the TCI state. Note that the "reference signal" may be replaced with a "synchronization signal" in the embodiments of the present invention.

At step S1, the base station 10 transmits a PDCCH-Config to the terminal 20 via an RRC signaling. The PDCCH-Config may include information for allowing the terminal 20 to receive the PDCCH and may be indicated to the terminal 20 as broadcast information or with other RRC signalings. The PDCCH-Config includes information for determining a control resource set and information for determining a search space.

At step S2, the terminal 20 determines the control resource set, the search space and the TCI state as used based on the PDCCH-Config received at step S1. The terminal 20 monitors control information in the determined search space.

At step S3, information for indicating that the TCI state is indicated with DCI is included in the PDCCH-Config, the base station 10 dynamically indicates the TCI state to the terminal 20 by means of the DCI that is a PHY later signaling. Then, the terminal 20 changes into the indicated TCI state (S4). Steps S3 and S4 may or may not be performed. For example, a random access procedure may be performed at the base station 10 and the terminal 20 after step S4. The terminal 20 assumes the QCL based on the SSS or the CSI-RS selected to transmit a PRACH and monitors control information.

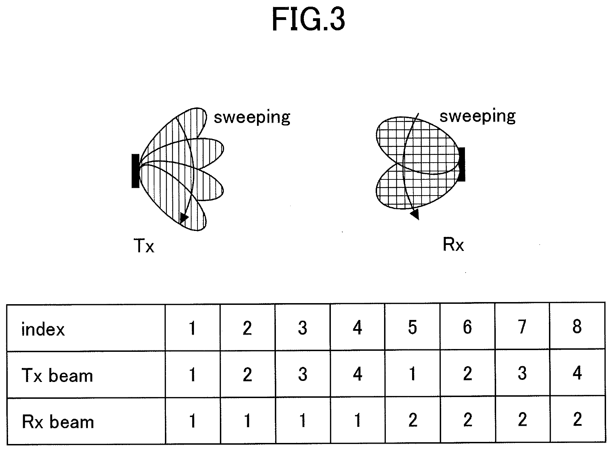

FIG. 3 is a diagram for illustrating exemplary beam management. In the NR, the beam management as illustrated in FIG. 3 is adopted. In the beam management, at least one of the base station 10 and the terminal 20 forms beams for improved transmission quality. FIG. 3 is the example of a system that allows four beams and two beams to be formed at the Tx side and the Rx side, respectively. In this system, beam sweeping is performed in both transmission and reception as illustrated in FIG. 3, and an appropriate beam pair is selected from all eight patterns of transmission and reception beam pairs. Note that beam control for different levels such as a rough beam and a fine beam may be performed.

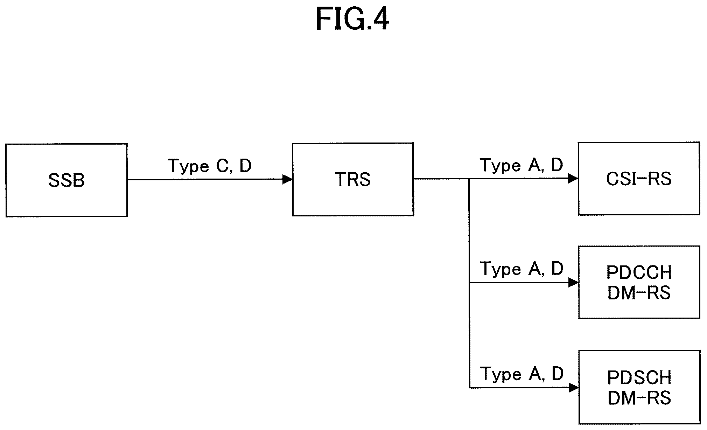

FIG. 4 is a diagram for illustrating an exemplary QCL. As stated above, the QCL is determined between two signals, and if radio parameters are considered to be the same between these signals, the signals are defined to be QCLed. In FIG. 4, an exemplary QCL association is illustrated. In the QCL association, a parent-child association of a source and a destination exists. For example, as illustrated in FIG. 4, the source of QCL types C and D is an SSB, and the destination is a TRS (Tracking Reference Signal or CSI-RS for tracking). Also, the source of QCL types A and D is the TRS, and the destination is a CSI-RS, a PDCCH DM-RS (Demodulation Reference Signal) and a PDSCH DM-RS.

In a conventional technique, information indicative of a source signal of the QCL is indicated for a certain signal. For example, the base station 10 indicates, to the terminal 20, QCL types C and D using the SSB as the source with respect to the TRS as the destination. A signaling for indicating information regarding the QCL may be performed by a TCI described in FIG. 2.

At time of switching the TCI state, if measurement is not performed, right before the switching, with the TCI state of the switching destination, the terminal 20 cannot determine a reception beam for receiving a PDCCH or a PDSCH transmitted with the TCI state of the switching destination. Accordingly, "Known condition" indicative of whether measurement has been performed with a certain TCI state is defined.

In case of "Known condition", indicated is that a RS resource has been transmitted for beam report or measurement with the target TCI state within X ms before the switching of the TCI state is triggered. On the other hand, cases other than "Known condition" are defined as "Unknown condition". A value suitable for X ms is being presently discussed.

The delay that is generated when switching to the Know TCI state by means of DCI, corresponds to the number of symbols (timeDurationForQCL) indicated in a UE capability. Note that when the TCI state is switched by means of the DCI, the target TCI state is already activated in a MAC (Media Access Control) layer and monitored by the terminal 20, and accordingly there is no case of switching to the Unknown TCI state by means of the DCI.

The delay that is generated when switching to the Known TCI state by means of a MAC signaling can be calculated in accordance with a formula as follows, ${T}_{HARQ} + 3 ms + {TQ}_{k} * \left({T}_{first - SSB}+{T}_{SSB - proc}\right) ,$ where:
T_{HARQ}: HARQ processing delay
3 ms: delay required for MAC-CE decoding
TOₖ: "1" in case of not included in an active TCI state list of a PDSCH; otherwise, "0"
T_{first-SSB}: time period until the first SSB transmission after the reception of a TCI state command by UE
T_{SSB-proc}: 2 ms

According to the above formula, the delay that is generated when switching to Known TCI state by means of a MAC signaling may require one SSB transmission occasion for configuring a time domain correctly, in addition to a MAC activation delay (MAC CE decoding + HARQ process delay) defined in the technical specification.

The delay that is generated when switching to the Unknown TCI state by means of a MAC signaling can be calculated in accordance with a formula as follows, ${T}_{HARQ} + 3 ms + {T}_{L 1 - RSRP} + {TO}_{uk} * \left({T}_{first - SSB}+{T}_{SSB - proc}\right) ,$ where:
T_{L1-RSRP}: L1-RSRP measurement delay for configuring a reception beam correctly, which corresponds to a L1-RSRP measurement period with one sample
TOᵤₖ: "1" in case of CSI-RS based L1-RSRP measurement; and "0" in case of SSB based L1-RSRP measurement

During the delay that is generated when switching to another TCI state by means of a MAC signaling, the terminal 20 performs reception with the TCI state before the switching.

The delay that is generated when switching to the Known TCI state by means of an RRC (Radio Resource Control) signaling can be calculated in accordance with a formula as follows, ${T}_{RRC_processing} + {TO}_{k} * \left({T}_{first - SSB}+{T}_{SSB - proc}\right) ,$ where:
T_{RRC_processing}: RRC processing delay, namely, 10 ms

According to the above formula, the delay that is generated when switching to Known TCI state by means of an RRC signaling may require one SSB transmission occasion for configuring a time domain correctly, in addition to an RRC processing delay defined in the technical specification.

The delay that is generated when switching to the Unknown TCI state by means of an RRC signaling can be calculated in accordance with a formula as follows, ${T}_{RRC_processing} + {T}_{L 1 - RSRP} + {TO}_{k} * \left({T}_{first - SSB}+{T}_{SSB - proc}\right) .$

During the delay for switching the TCI state by means of an RRC signaling, scheduling is restricted.

Note that the TCI state list via the above MAC signaling is used to switch an active TCI state of a PDSCH by means of the MAC signaling. The TCI state list is defined in the same way as in the switching of the TCI state based on the MAC signaling.

Here, for example, if the base station 10 switches a transmission beam, the QCL information must be switched. For example, if the QCL information is switched, measurement delay is increased. If the QCL information is switched, the terminal 20 must perform time synchronization and frequency synchronization again or perform transmission and reception beam pair learning again.

Then, in an embodiment of the present invention, a scheme for reducing processing delay or signaling overhead involved in switching the QCL information is proposed. For example, in an embodiment of the present invention, the processing time or the number of operations required for synchronization of the terminal 20 and processing time or the number of operations required for beam control can be reduced.

For example, in an embodiment of the present invention, a condition that does not require a QCL source is defined, and synchronization using a QCL destination directly is enabled. For example, in an embodiment of the present invention, the switching timing of the QCL information can be restricted to reduce the processing delay and the signaling overhead. Note that in an embodiment of the present invention, the QCL definition is not limited to conventional QCL definitions. For example, a newly defined QCL type may be used.

For example, if the terminal 20 can perform synchronization by means of a reference signal alone as a QCL destination, the terminal 20 need not configure or refer to the reference signal as the QCL source. In other words, the terminal 20 may perform the synchronization by means of the reference signal as the QCL destination and receive a channel.

For example, if a multiplexing density of reference signals is higher than or equal to a predetermined value, the terminal 20 need not configure the QCL source. The multiplexing density of reference signals may be the density of a time domain, the density of a frequency domain or a configuration parameter density(ρ) of a CSI-RS.

Also, for example, if the number of resource elements where a reference signal is assigned is more than or equal to a predetermined value, the terminal 20 need not configure the QCL source. The number of resource elements where the reference signal is assigned may be defined with the number of resource elements per antenna port. Also, for example, if the transmission bandwidth of a reference signal or the transmission bandwidth of a channel received by means of the reference signal is greater than or equal to a predetermined value, the terminal 20 need not configure the QCL source. Also, for example, if the number of measurement samples for a reference signal is more than or equal to a predetermined value, the terminal 20 need not configure the QCL source. For example, the number of measurement samples may be defined based on how many times the CSI-RS indicated by a CSI-RS resource configuration can be measured in a measurement period.

Although the condition for the terminal 20 without requiring the QCL source has been described above, the condition negating the condition without requiring the QCL source may be defined as the condition for requiring the QCL source. For example, the multiplexing density of a reference signal is lower than a predetermined value, the terminal 20 may need the QCL source. For example, if the number of resource elements where a reference signal is assigned is smaller than a predetermined value, the terminal 20 may need the QCL source. For example, if the transmission bandwidth of a reference signal or the transmission bandwidth of a channel received by means of the reference signal is smaller than a predetermined value, the terminal 20 may need the QCL source. For example, if the number of measurement samples for a reference signal is smaller than a predetermined value, the terminal 20 need not need the QCL source.

Also, although the condition for the terminal 20 without requiring the QCL source has been described above, the condition without requiring the QCL source may be defined as the condition for the QCL source. For example, if the multiplexing density of a reference signal is higher than or equal to a predetermined value, the reference signal can be configured as the QCL source. For example, if the number of resource elements where a reference signal is assigned is more than or equal to a predetermined value, the reference signal may be configured as the QCL source. For example, if the transmission bandwidth of a reference signal or the transmission bandwidth of a channel received by means of the reference signal is greater than or equal to a predetermined value, the reference signal may be configured as the QCL source. For example, if the number of measurement samples for a reference signal is larger than or equal to a predetermined value, the reference signal may be configured as the QCL source.

Also, although the condition for the terminal 20 without requiring the QCL source has been described above, the condition negating the condition for requiring the QCL source may be defined as the condition for denying configuration as the QCL source. For example, if the multiplexing density of a reference signal is lower than a predetermined value, the reference signal cannot be configured as the QCL source. For example, if the number of resource elements where the reference signal is assigned is smaller than a predetermined value, the reference signal cannot be configured as the QCL source. For example, if the transmission bandwidth of a reference signal or the transmission bandwidth of a channel received by means of the reference signal is smaller than a predetermined value, the reference signal cannot be configured as the QCL source. For example, if the number of measurement samples for a reference signal is smaller than a predetermined value, the reference signal cannot be configured as the QCL source.

If the QCL source is configured in spite of the case of the condition without requiring the QCL source being satisfied, the terminal 20 may use one or both a reference signal as the QCL destination and a reference signal as the QCL source to perform synchronization. For example, the terminal 20 may use the reference signal as the QCL source, the reference signal as the QCL destination or a reference signal of a higher multiplexing density to perform synchronization or determine a reference signal to be applied depending on signal types. For example, if a TRS is included in the reference signal, the terminal 20 may use the TRS preferentially to perform synchronization.

The QCL association in the time domain may be determined. The QCL association with a signal transmitted before may be defined, or the QCL association may be indicated.

For example, a signal in slot #n and a signal in slot #n-k may be defined as the QCL association. Presence or absence of the QCL association may be switched depending on the value of k. For example, presence of the QCL association may be defined if k < 5 and absence of the QCL association may be defined if k ≧ 5. If signals are of the same type (for example, they are of the DM-RS type, the CSI-RS type or the SS type), presence of the QCL association may be defined. Also, for example, association between a signal in slot #n and a latest signal received before the slot #n may be defined as QCL association. Schemes assuming consecutive QCLs in the time domain are particularly advantageous in cases where beams are continuously switched.

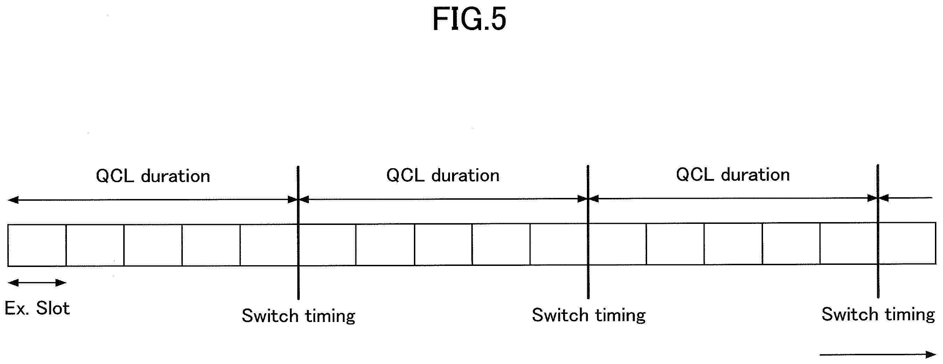

FIG. 5 is a diagram illustrating an example of switching the QCL information (1) according to an embodiment of the present invention. There are cases where information associated with beams indicated by the terminal 20 (for example, a CRI (CSI-Reference Indicator) is periodic or partial. Accordingly, it is assumed that the QCL switching by the base station 10 is also periodic or partial. For example, when the CRI is fed back every ten slots, the period of switching the QCL information by the base station 10 may be ten slots. Signaling associated with the QCL may be reduced by defining the switch timing of the QCL information.

As illustrated in FIG. 5, the switch timing of the QCL information may be configured in the time domain. The switch timing may be indicated from the base station 10 to the terminal 20. In other words, it may be assumed that signals in the same QCL duration are QCLed or that signals located across the switch timing are not QCLed.

Also, as illustrated in FIG. 5, the switch timing of the QCL information may be periodically configured. A period and an offset of the switch timing of the QCL information may be indicated from the base station 10 to the terminal 20. For example, the switch timing of the QCL information may be configured every five slots. The periodic switch timing of the QCL information may be a radio frame unit of 10 ms or may be indicated from the base station 10 to the terminal 20 by an RRC signaling or a MAC signaling.

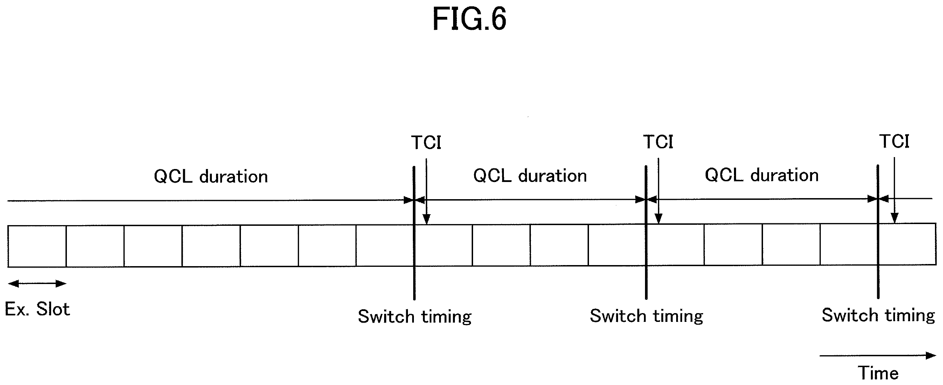

FIG. 6 is a diagram illustrating an example of switching the QCL information (2) according to an embodiment of the present invention. As illustrated in FIG. 6, the switch timing of the QCL information may be aperiodically configured. Presence or absence of switching the QCL information may be indicated from the base station 10 to the terminal 20. For example, presence or absence of switching the QCL information may be indicated by a MAC-CE or DCI. Also, a timing targeted for switching the QCL information (for example, a specific slot) may be indicated by the MAC-CE or the DCI. In other words, it may be indicated that signals before and after the timing targeted for switching the QCL information are not QCLed. Note that information associated with switching the QCL information may be indicated only at some of the timings. The TCI information may be indicated in only some of DCIs. For example, the TCI information may be indicated every ten slots. The QCL information need not be multiplexed in slots other than slots where the TCI information is indicated, or other information may be multiplexed to a payload.

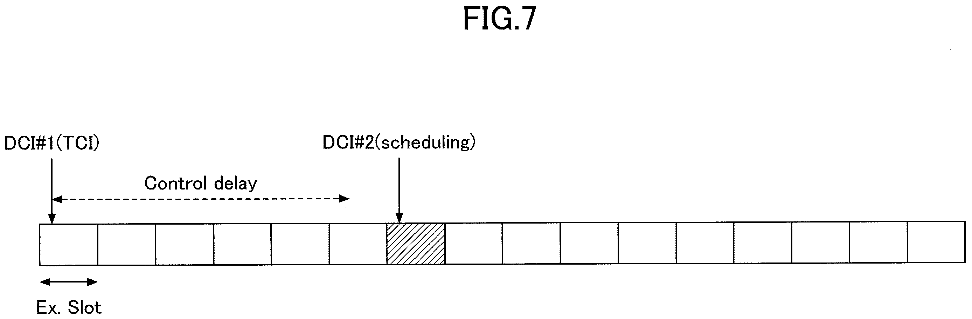

FIG. 7 is a diagram illustrating an example of an indication by DCI (1) according to an embodiment of the present invention. If different TCIs are applied to a PDCCH and a PDSCH, respectively, the PDCCH and the PDSCH must be separated in the time domain. The separation value in the time domain is defined according to a UE capability. For example, if there are at least 14 symbols between DCI for scheduling and the scheduled PDSCH (if SCS (Subcarrier Spacing) = 120 kHz), the TCI state indicated by the DCI for scheduling can be applied to the scheduled PDSCH. Since the separation in the time domain is generated between the PDCCH and the PDSCH, flexible scheduling is difficult in the case, for example, where a priority packet is inserted between the PDCCH and the PDSCH. On the other hand, if the separation in the time domain generated between the PDCCH and the PDSCH is less than or equal to a predetermined value, The QCL or the TCI state for a CORESET (PDCCH) of the minimum ID for the latest slot is applied to the PDSCH.

Then, the TCI state may be configured independently from data scheduling. For example, as illustrated in FIG. 7, different DCIs may be used for configuration of the TCI state and the data scheduling, respectively. After passage of a control delay time (Control Delay) after reception of DCI#1 including a TCI, the TCI may be applied to the PDSCH by means of DCI#2 including scheduling. Here, the TCI included in DCI#2 may be ignored at reception time of the PDSCH by means of DCI#2.

If the DCI including the TCI is unsuccessfully decoded, the terminal 20 may reuse the TCI that has been previously applied or may apply the QCL or the TCI state for the CORESET (PDCCH) of the minimum ID.

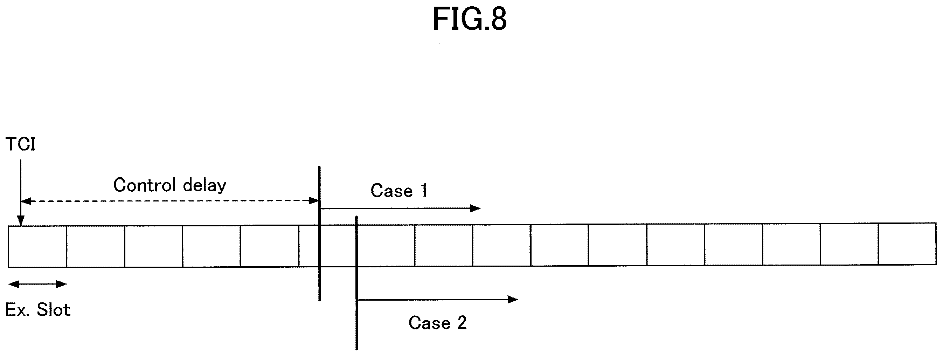

FIG. 8 is a diagram illustrating an example of an indication by DCI (2) according to an embodiment of the present invention. For the TCI, the DCI may be signaled independently. As in Case 1 illustrated in FIG. 8, for PDSCH symbols after the control delay time during which the TCI is applied, a different TCI may be assumed. In other words, the TCI may be switched within a certain slot.

Also, as in Case 2 illustrated in FIG. 8, for PDSCH after the control delay time during which the TCI is applied, a different TCI may be assumed. In other words, the TCI may be switched from the start of a certain slot.

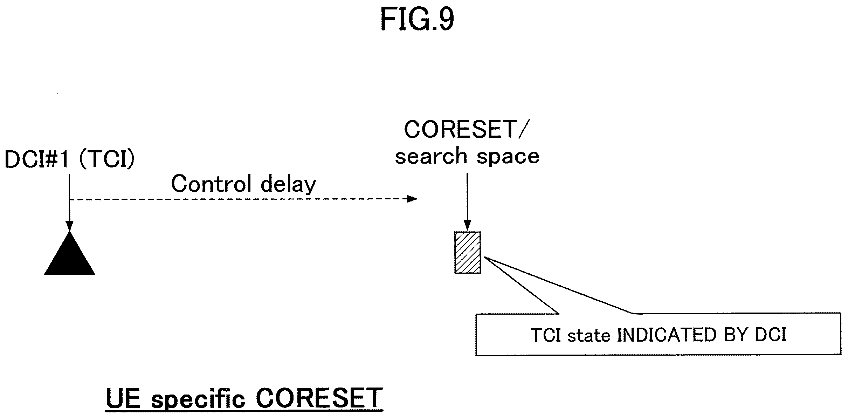

FIG. 9 is a diagram illustrating an example of configuration of a PDCCH (1) according to an embodiment of the present invention. If the TCI state of a PDSCH is indicated by DCI and the TCI state of a PDCCH is indicated by a MAC-CE, the PDSCH may be able to reflect the latest TCI state than the PDCCH.

Then, as illustrated in FIG. 9, the TCI state of the PDCCH for DCI#2 including scheduling may be configured by means of DCI#1 including the TCI. In other words, it may be assumed that if the TCI state is indicated by DCI#1, DCI#2 detected after control delay may be of the TCI state indicated by DCI#1. Here, this configuration method for the TCI state may be limited to UE specific CORESET that is specific to the terminal 20, as illustrated in FIG. 9. Similar to Case 1 illustrated in FIG. 8, for PDCCH symbols after the control delay time during which the TCI is applied, a different TCI may be assumed. In other words, the TCIs may be switched within a certain slot. Also, similar to Case 2 illustrated in FIG. 8, for the PDCCH after the control delay time during which the TCI is applied, a different TCI may be assumed. In other words, the TCI may be switched from the start of a certain slot.

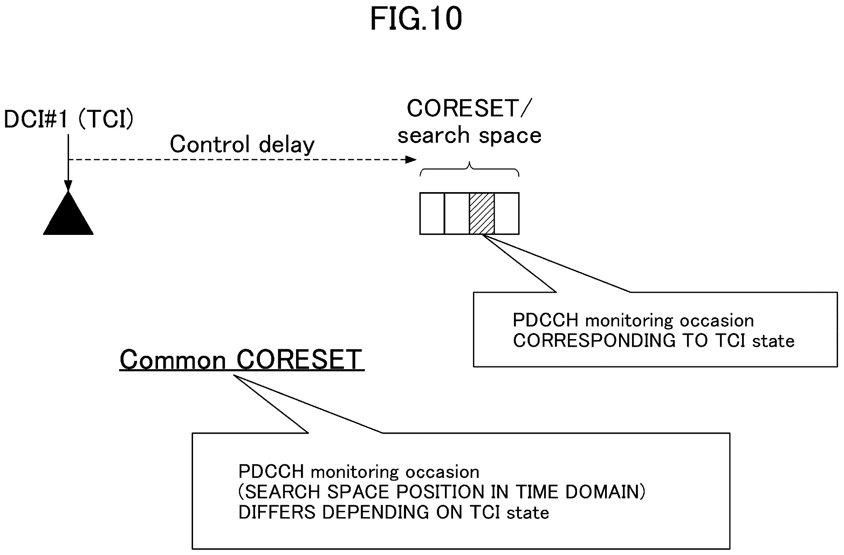

FIG. 10 is a diagram illustrating an example of configuration of a PDCCH (2) according to an embodiment of the present invention. The configuration scheme of the TCI state illustrated in FIG. 9 may not be applied to a Common CORESET illustrated in FIG. 10. This is because the PDCCH monitoring occasion for the Common CORESET, that is, the position of a search space in the time domain, differs depending on the TCI state, and accordingly if DCI#1 for indicating the TCI is erroneously detected, the assumption of the TCI state may change, which makes it impossible to receive the search space in the time domain corresponding to the correct TCI state. In the case of UE specific CORESET, the search space in the time domain does not change depending on the TCI state, and the configuration scheme of the TCI state illustrated in FIG. 9 may be applied.

Note that the embodiments of the present invention can be applied regardless of uplink and downlink transmission and reception. In this case, an uplink signal or channel can be interchanged with a downlink signal or channel. Also, uplink feedback information can be interchanged with downlink control signaling.

In the present disclosure, channels and signaling schemes for the NR have been mainly described, but the embodiments of the present invention can be applied to channels and signaling schemes having the same functionalities as the NR. For example, they can be applied to the LTE/LTE-A or other RATs (Radio Access Technologies), for example.

In the present disclosure, various signaling examples have been described, but they are not limited to any explicit scheme. They may be indicated implicitly or may be uniquely determined in the specification without signaling.

In the present disclosure, various signaling examples have been described, but embodiments are not limited to the described ones. For example, the signaling may use signaling in different layers such as an RRC, a MAC-CE and DCI or use a MIB (Master Information Block), a SIB (System Information Block) or the like.

In the present disclosure, the representations "beams", "BF (Beam Forming) RS" or the like are used, but it may be transparent to the base station 10 or the terminal 20 whether the physical signals or channels are beam-formed. Also, the beams may be formed in unit of antenna port. Similarly, beam selection may be replaced with resource selection or the like, and beam indices may be replaced with resource indices, antenna port indices or the like.

In the present disclosure, a RB (Resource Block) and a subcarrier can be interchanged with each other. Similarly, in the present disclosure, a slot and a symbol can be interchanged with each other.

The above-stated embodiments and variations can be combined with each other, and features illustrated in these examples can be combined with each other in various combinations. The embodiments of the present invention are not limited to a certain combination disclosed in the present specification.

According to the above-stated embodiments, the terminal 20 can perform synchronization using a QCL destination directly by defining a condition without requiring a QCL source, and can reduce processing delay and signaling involved in switching QCL information. Also, the terminal 20 can reduce signaling by limiting the QCL switch timing. Also, the terminal 20 enables scheduling where the TCI state is flexibly configured by separately performing scheduling for the TCI state and scheduling for data. Also, the terminal 20 can reduce delay before application of the TCI state by applying configuration of the TCI state to a PDCCH by means of DCI.

In other words, synchronization operations associated with the QCL (Quasi-Co-Location) can be decreased in a radio communication system.

### (Device Arrangement)

Next, exemplary functional arrangements of the base station 10 and the terminal 20 that perform operations and actions as stated above are described. The base station 10 and the terminal 20 include functions of implementing the above-stated embodiments. Note that the base station 10 and the terminal 20 each may have only a portion of the functions of the embodiments.

### <Base station 10>

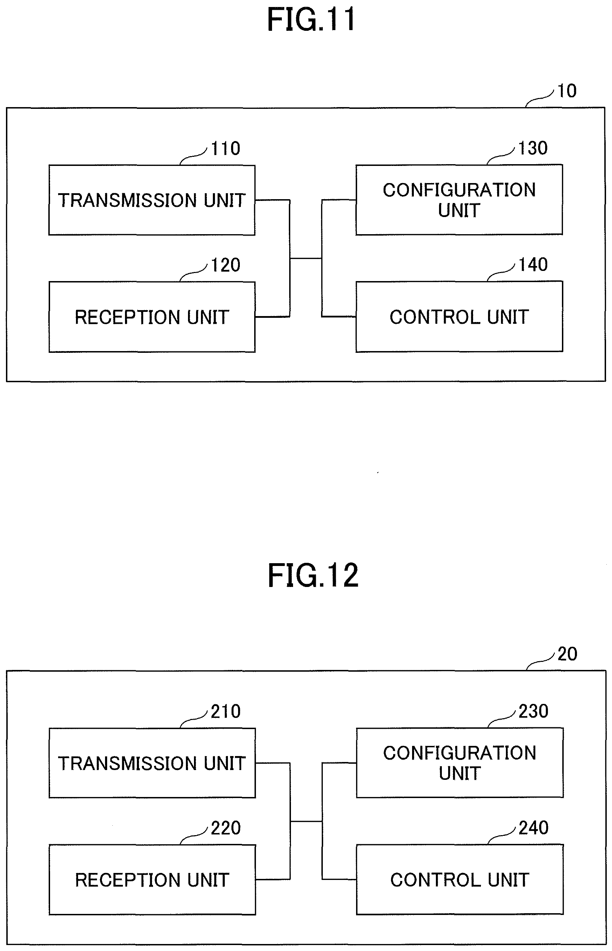

FIG. 11 illustrates an example of functional arrangement of the base station 10 according to an embodiment of the present invention. As shown in FIG. 11, the base station 10 includes a transmission unit 110, a reception unit 120, a configuration unit 130 and a control unit 140. The functional arrangement shown in FIG. 11 is only one example. The functional separation and the names of the functional units may be arbitrary as long as operations according to the present embodiment can be achieved.

The transmission unit 110 includes a function of generating a signal for transmission to the side of the terminal 20 and wirelessly transmitting the signal. Also, the transmission unit 110 transmits an inter-network node message to other network nodes. The reception unit 120 includes a function of receiving various signals transmitted from the terminal 20 and acquiring information for upper layers from the received signals, for example. Also, the transmission unit 110 includes a function of transmitting an NR-PSS, an NR-SSS, an NR-PBCH, a DL/UL control signal or the like to the terminal 20. Also, the reception unit 120 receives an inter-network node message from other network nodes.

The configuration unit 130 stores preconfigured configurations and various configurations for transmission to the terminal 20 in a memory device and reads them from the memory device as needed. Contents of the configurations may be control information for the terminal 20 and information associated with the QCL or the like, for example.

The control unit 140 performs operations for generating control information for transmission to the terminal 20 as stated in conjunction with the embodiments. Also, the control unit 140 performs communication control to which transmission beam forming is applied based on the information associated with the QCL. The functional portions of the control unit 140 related to signal transmission may be included in the transmission unit 110, and the functional portions of the control unit 140 related to signal reception may be included in the reception unit 120.

### <Terminal 20>

FIG. 12 is a diagram illustrating an example of functional arrangement of the terminal 20 according to an embodiment of the present invention. As illustrated in FIG. 12, the terminal 20 has a transmission unit 210, a reception unit 220, a configuration unit 230 and a control unit 240. The functional arrangement shown in FIG. 12 is only one example. The functional separation and the names of the functional units may be arbitrary as long as operations according to the present embodiment can be achieved.

The transmission unit 210 has a function of generating a transmission signal from transmission data and wirelessly transmitting the transmission signal. The reception unit 220 wirelessly receives various signals and acquires signals for upper layers from the received physical layer signals. Also, the reception unit 220 has a function of receiving an NR-PSS, an NR-SSS, an NR-PBCH, a DL/UL/SL control signal and so on transmitted from the base station 10. Also, for example, as D2D communication, the transmission unit 210 transmits a PSCCH (Physical Sidelink Control Channel), a PSSCH (Physical Sidelink Shared Channel), a PSDCH (Physical Sidelink Discovery Channel), a PSBCH (Physical Sidelink Broadcast Channel) or the like to other terminals 20, and the reception unit 120 receives the PSCCH, the PSSCH, the PSDCH, the PSBCH or the like from other terminals 20.

The configuration unit 230 stores various configurations received at the reception unit 220 from the base station 10 or the terminal 20 in a memory device and reads them from the memory device as needed. Also, the configuration unit 230 stores preconfigured configurations. Contents of the configurations may be control information for the terminal 20 and information associated with the QCL and so on, for example.

The control unit 240 applies reception beam forming based on control information and QCL information acquired from the base station 10 to perform synchronization operations as stated above in conjunction with the embodiments. Also, the control unit 240 may control a random access procedure with the base station 10. The functional portion of the control unit 240 regarding signal transmission may be included in the transmission unit 210, and the functional portion of the control unit 240 regarding signal reception may be included in the reception unit 220.

### (Hardware arrangement)

The block diagrams (FIGS. 11 and 12) used for the description of the above embodiments show blocks of functional units. These functional blocks (components) are implemented by any combination of at least one of hardware and software. In addition, the implementation method of each function block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

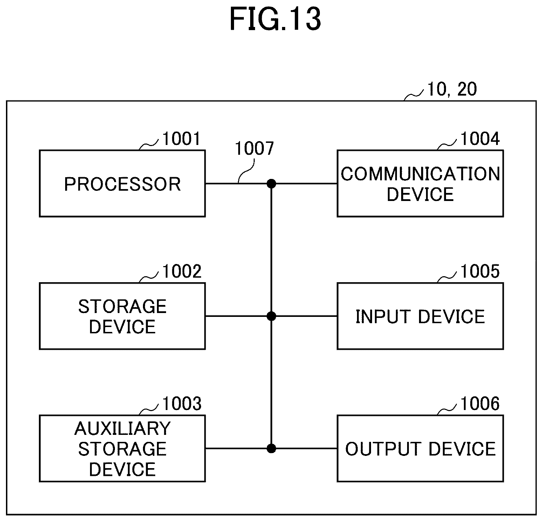

For example, each of the base station 10, the terminal 20 and so on according to one embodiment of the present invention may function as a computer performing operations for a radio communication method according to this embodiment. FIG. 13 is a diagram illustrating an example of a hardware configuration of the base station 10 and the terminal 20 according to one embodiment of the present disclosure. The base station 10 and the terminal 20 as stated above may be physically configured as a computer device including a processor 1001, a memory 1002, a storage 1003, a communication device 1004, an input device 1005, an output device 1006, a bus 1007, etc.

In the following description, the term "device" can be read as a circuit, a device, a unit, etc. The hardware configuration of the base station 10 and the terminal 20 may be configured to include one or more of the respective devices shown in the figure, or may be configured without some devices.

Each function of the base station 10 and the terminal 20 is implemented by loading predetermined software (program) on hardware, such as the processor 1001 and the memory 1002, so that the processor 1001 performs computation and controls communication by the communication device 1004, and at least one of reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, etc. For example, the above-stated control units 140 and 240 or the like may be implemented with the processor 1001.

Additionally, the processor 1001 reads a program (program code), a software module, data, etc., from at least one of the storage 1003 and the communication device 1004 to the memory 1002, and executes various processes according to these. As the program, a program is used which causes a computer to execute at least a part of the operations described in the above-described embodiment. For example, the control unit 140 of the base station 10 shown in FIG. 11 may be implemented by a control program that is stored in the memory 1002 and that is operated by the processor 1001. Also, for example, the control unit 240 of the terminal 20 shown in FIG. 12 may be implemented by a control program that is stored in the memory 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The memory 1002 is a computer readable storage medium, and, for example, the memory 1002 may be formed of at least one of a ROM (Read Only Memory), an EPROM (Erasable Programmable ROM), an EEPROM (Electrically Erasable Programmable ROM), a RAM (Random Access Memory), etc. The memory 1002 may be referred to as a register, a cache, a main memory (main storage device), etc. The memory 1002 may store a program (program code), a software module, etc., which can be executed for implementing the radio communication method according to one embodiment of the present disclosure.

The storage 1003 is a computer readable storage medium and may be formed of, for example, at least one of an optical disk, such as a CD-ROM (Compact Disc ROM), a hard disk drive, a flexible disk, an optical magnetic disk (e.g., a compact disk, a digital versatile disk, a Blu-ray (registered trademark) disk, a smart card, a flash memory (e.g., a card, a stick, a key drive), a floppy (registered trademark) disk, a magnetic strip, etc. The storage 1003 may be referred to as an auxiliary storage device. The above-described storage medium may be, for example, a database including at least one of the memory 1002 and the storage 1003, a server, or any other suitable medium.

The communication device 1004 is hardware (transmitting and receiving device) for performing communication between computers through at least one of a wired network and a wireless network, and is also referred to, for example, as a network device, a network controller, a network card, a communication module, etc. The communication device 1004 may be configured to include, for example, a high frequency switch, a duplexer, a filter, a frequency synthesizer, etc., to implement at least one of frequency division duplex (FDD: Frequency Division Duplex) and time division duplex (TDD: Time Division Duplex). For example, a transceiver antenna, an amplification unit, a transceiver unit, a channel interface or the like may be implemented with the communication device 1004. The transceiver unit may have an implementation with the transmission unit and the reception unit that are physically or logically separated.

The input device 1005 is an input device (e.g., a keyboard, a mouse, a microphone, a switch, a button, a sensor, etc.) that receives an external input. The output device 1006 is an output device (e.g., a display, speaker, LED lamp, etc.) that performs output toward outside. The input device 1005 and the output device 1006 may be configured to be integrated (e.g., a touch panel).

Each device, such as processor 1001 and memory 1002, is also connected by the bus 1007 for communicating information. The bus 1007 may be formed of a single bus or may be formed of different buses between devices.

Also, the base station 10 and the terminal 20 may include hardware, such as a microprocessor, a digital signal processor (DSP: Digital Signal Processor), an ASIC (Application Specific Integrated Circuit), a PLD (Programmable Logic Device), and a FPGA (Field Programmable Gate Array), which may implement some or all of each functional block. For example, the processor 1001 may be implemented using at least one of these hardware components.

### (Conclusion of the embodiments)

As stated above, according to an embodiment of the present invention, there is provided a terminal, comprising: a control unit that in a case where a reference signal associated with a channel satisfies a condition, uses the reference signal to perform synchronization without referring to a QCL (Quasi-Co-Location) source for the reference signal; and a reception unit that receives the channel after the control unit uses the reference signal to perform the synchronization.

According to the above arrangement, the terminal 20 can determine a condition where a QCL source is unnecessary and perform synchronization using a QCL destination directly to reduce processing delay and signaling involved in switching QCL information. In other words, synchronization operations associated with a QCL (Quasi-Co-Location) can be reduced in a radio communication system.

The condition may be a multiplexing density of a reference signal being higher than or equal to a certain value, the number of resource elements where a reference signal is assigned being larger than or equal to a certain value, or the number of measurement samples for a reference signal being larger than or equal to a certain value. According to the arrangement, the terminal 20 can determine a condition where a QCL source is unnecessary and perform synchronization using a QCL destination directly to reduce processing delay and signaling involved in switching QCL information.

The control unit may perform synchronization by assuming that a signal received at a time point and a signal received before the time point are QCLed. According to the arrangement, the terminal 20 can reduce signaling involved in switching the QCL.

The control unit may perform synchronization by assuming that QCL information is periodically switched. According to the arrangement, the terminal 20 can reduce signaling by limiting the QCL switch timing.

The control unit may perform synchronization based on control information that includes QCL information, the control information being received in a different time domain from control information for scheduling a channel to which the QCL information is applied. According to the arrangement, the terminal 20 enables TCI state configured scheduling flexibly by performing scheduling for the TCI state and data separately.

Also, according to an embodiment of the present invention, there is provided a communication method implemented by a terminal, comprising: a control procedure that if a reference signal associated with a channel satisfies a condition, uses the reference signal to perform synchronization without referring to a QCL (Quasi-Co-Location) source for the reference signal; and a reception procedure that receives the channel after the control unit uses the reference signal to perform the synchronization.

According to the above arrangement, the terminal 20 can determine a condition where a QCL source is unnecessary and perform synchronization using a QCL destination directly to reduce processing delay and signaling involved in switching QCL information. In other words, synchronization operations associated with a QCL (Quasi-Co-Location) can be reduced in a radio communication system.

### (Supplemental embodiments)

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiment, the orders of steps may be changed unless a contradiction arises. For the sake of convenience for describing the processing, the base station 10 and the terminal 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (a MIB (Master Information Block) and a SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also, a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station 10 described in the present disclosure may in some cases be performed by an upper node. It is clear that, in a network that includes one or more network nodes including the base station 10, various operations performed for communication with the terminal 20 can be performed by at least one of the base station 10 and another network node other than the base station 10 (for example, a MME, a S-GW, or the like may be mentioned, but not limited thereto). In the above, the description has been made for the case where another network node other than the base station 10 is a single node as an example. However, the other network node may be a combination of a plurality of other network nodes (for example, an MME and a S-GW).

Information, signals, or the like described in the present disclosure may be output from an upper layer (or a lower layer) to a lower layer (or an upper layer). Information, signals, or the like described in the present disclosure may be input and output via a plurality of network nodes.

Information or the like that has been input or output may be stored at a predetermined location (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a subprogram, a software module, an application, a software application, a software package, a routine, a subroutine, an object, an executable file, an execution thread, a procedure, a function, and the like.

Also, software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Also, information, parameters, and the like described in the present disclosure may be expressed by absolute values, may be expressed by relative values with respect to predetermined values, and may be expressed by corresponding different information. For example, radio resources may be indicated by indices.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells. In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication device, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Things) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of user equipments 20 (that may be called D2D (Device-to-Device), V2X (Vehicle-to-Everything), or the like). In this case, a user equipment 20 may have above-described functions of the base station apparatus 10. In this regard, a word such as "up" or "down" may be replaced with a word corresponding to communication between terminals (for example, "side"). For example, an uplink channel, a downlink channel, or the like may be replaced with a side channel.

Similarly, a user terminal according to the present disclosure may be read as a base station. In this case, a base station may have above-described functions of the user terminal.

The term "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above-described apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of numerology.

The numerology may be a communication parameter that is applied to at least one of transmission and reception of a signal or a channel. The numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in a frequency domain, a specific windowing processing performed by a transceiver in a time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on the numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit for transmitting a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each user equipment 20 to assign, in TTI units, radio resources (such as frequency bandwidths, transmission power, and the like that can be used by each user equipment 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, a normal TTI, a subframe, and the like) may be read as TTI having a time length exceeding 1 ms, and a short TTI (for example, a shortened TTI) may be read as a TTI having a TTI length less than the TTI length of the long TTI and equal to or more than 1 ms.

A resource block (RB) is a resource assignment unit in terms of a time domain and a frequency domain and may include one or a plurality of consecutive subcarriers in terms of frequency domain. The number of subcarriers included in an RB may be the same regardless of the numerology, and, for example, may be 12. The number of subcarriers included in a RB may be determined based on the numerology.

Also, in terms of the time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

Also, a resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for certain numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of configured BWPs may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following the article is of a plural form.

Throughout the present disclosure, an expression that "A and B are different" may mean that "A and B are different from each other". Also, this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

In the present disclosure, the PDSCH or the PDCCH is one example of a channel. The DCI is one example of control information.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### LIST OF REFERENCE SYMBOLS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 1001: Processor
- 1002: Memory
- 1003: Storage
- 1004: Communication device
- 1005: Input device
- 1006: Output device

### FURTHER EMBODIMENTS ARE AS FOLLOWS.

E1. A terminal, comprising:
   a control unit that uses, in a case where a reference signal associated with a channel satisfies a condition, the reference signal to perform synchronization without referring to a QCL (Quasi-Co-Location) source for the reference signal; and
   a reception unit that receives the channel after the synchronization is performed by the control unit by using the reference signal.
E2. The terminal as claimed in E1, wherein the condition is: a multiplexing density of a reference signal being higher than or equal to a certain value; the number of resource elements where a reference signal is assigned being larger than or equal to a certain value; or the number of measurement samples for a reference signal being larger than or equal to a certain value.
E3. The terminal as claimed in E1, wherein the control unit performs synchronization by assuming that a signal received at a time point and a signal received before the time point are QCLed.
E4. The terminal as claimed in E1, wherein the control unit performs synchronization by assuming that QCL information is periodically switched.
E5. The terminal as claimed in E1, wherein the control unit performs synchronization based on control information that includes QCL information, the control information being received in a different time domain as compared with control information for scheduling a channel to which the QCL information is applied.
E6. A communication method implemented by a terminal, comprising:
   using, in a case where a reference signal associated with a channel satisfies a condition, the reference signal to perform synchronization without referring to a QCL (Quasi-Co-Location) source for the reference signal; and
   receiving the channel after the synchronization is performed by using the reference signal.

## Claims

1. A terminal (20) comprising:
a receiver (220) configured to receive a first Downlink Control Information, DCI, and a second DCI;
**characterized by** further comprising
a controller (240) configured to apply a Transmission configuration indicator, TCI, state indicated by the first DCI to reception of a data channel scheduled by the second DCI.

2. The terminal (20) according to claim 1,
wherein the controller (240) is configured to apply the TCI state to reception of the data channel in a case that the data channel is received after some period of time from receiving the first DCI.

3. The terminal (20) according to claim 1,
wherein the controller (240) is configured not to apply a TCI state indicated by the second DCI to reception of the data channel.

4. The terminal (20) according to claim 1,
wherein the controller (240) is configured to switch a TCI state applying reception of the data channel from a start of a certain slot.

5. The terminal (20) according to claim 1,
wherein the controller (240) is configured to apply the TCI state to reception of the second DCI in a case that the second DCI is received after some period of time from receiving the first DCI.

6. The terminal (20) according to claim 1,
wherein the controller (240) is configured to apply the TCI state to reception of the second DCI in a case that the second DCI is received in a UE specific Control resource set, CORESET, after some period of time from receiving the first DCI.
